# DEMANDE DE BREVET EUROPEEN

(11) **EP 4 390 572 A1**
(43) Date de publication de la demande: **26.06.2024**
(21) Numéro de dépôt: 22215938.6
(22) Date de dépôt: 22.12.2022
(51) Int. Cl.: G04C 10/02, G04B 19/30

(54) **PIECE D'HORLOGERIE COMPRENANT UN ELEMENT D'HABILLAGE**

(71) Demandeur: ETA SA Manufacture Horlogère Suisse, 2540 Grenchen (CH)
(72) Inventeur: HUOT-MARCHAND, Sylvain, 2743 Eschert (CH); DUBUGNON, Dominique, 1162 Saint-Prex (CH)
(74) Mandataire: ICB SA

(57) **Abrégé**

L'invention concerne une pièce d'horlogerie (1) comportant au moins un élément d'habillage (2a, 2b) comprenant une face visible (20a) formée d'au moins une première partie opaque et d'au moins une deuxième partie transparente ou translucide, ledit au moins un élément d'habillage (2a, 2b) comportant un dispositif d'éclairage autonome (3) comportant les éléments fonctionnels suivants :
- au moins une source lumineuse (4) susceptible de générer une lumière (28) dans la face visible (20a) de l'élément d'habillage (2a, 2b) ;
- une unité d'alimentation électrique autonome (21), et
- une unité de contrôle (7) configurée pour gérer le fonctionnement de la source lumineuse (4) ;

ledit au moins un élément d'habillage (2a, 2b) étant formé par un assemblage (9a, 9b) d'une pluralité de couches superposées (10, 11, 12, 13, 14) reliées entre elles et comportant chacune un ou plusieurs éléments fonctionnels du dispositif d'éclairage autonome (3).

## Description

### Domaine technique de l'invention

La présente invention concerne une pièce d'horlogerie comprenant au moins un élément d'habillage doté d'un dispositif d'éclairage totalement autonome. Plus précisément, la présente invention concerne une pièce d'horlogerie présentant des jeux de lumière originaux, dans un but fonctionnel, esthétique et/ou ludique.

### Arrière-plan technologique

Créer des pièces d'horlogerie telles que des montres-bracelets présentant un aspect esthétique amélioré est une préoccupation de tous les instants chez les fabricants horlogers et notamment chez les personnes chargées de concevoir les divers éléments d'habillage. Il serait trop long de dresser ici la liste de toutes les solutions qui ont été envisagées pour impartir à une pièce d'horlogerie un aspect aussi soigné et esthétique que possible. A titre d'exemple seulement, on peut citer la technique du guillochage des cadrans, la forme et/ou la couleur des appliques du cadran ou des aiguilles ou bien encore l'ajout de pierres précieuses ou semi-précieuses.

Dans ce contexte, on comprend qu'il existe un besoin de trouver une solution, qui ne présente pas les inconvénients de l'art antérieur et qui vise à proposer à la clientèle des montres dont l'aspect est tout à la fois esthétique, surprenant et fonctionnel.

### Résumé de l'invention

L'invention pallie les inconvénients de l'art antérieur en procurant une pièce d'horlogerie permettant de laisser échapper de la lumière depuis l'intérieur d'un élément d'habillage de la pièce avec une transmission lumineuse optimale, tout en présentant des jeux de lumière originaux, dans un but fonctionnel, esthétique et/ou ludique.

A cet effet, la présente invention concerne une pièce d'horlogerie comportant au moins un élément d'habillage comprenant une face visible formée d'au moins une première partie opaque et d'au moins une deuxième partie transparente ou translucide, ledit au moins un élément d'habillage comportant un dispositif d'éclairage autonome comportant les éléments fonctionnels suivants :
- au moins une source lumineuse susceptible de générer une lumière dans la face visible de l'élément d'habillage ;
- une unité d'alimentation électrique autonome, et
- une unité de contrôle configurée pour gérer le fonctionnement de la source lumineuse ;
ledit au moins un élément d'habillage étant formé par un assemblage d'une pluralité de couches superposées reliées entre elles et comportant chacune un ou plusieurs éléments fonctionnels du dispositif d'éclairage autonome.

Dans d'autres modes de réalisation :
- ledit au moins un éléments d'habillage comprend un fond, une carrure, un cadran, un brin de bracelet, une lunette, un réhaut, un bouton-poussoir, une couronne de remontoir et/ou une coiffe de couronne ;
- l'assemblage est constitué d'une première couche formant ladite face visible comprenant ladite au moins une source lumineuse ;
- ladite au moins une source lumineuse est agencée dans la première couche, ledit agencement étant configuré pour que l'essentiel ou la totalité de la lumière produite par ladite au moins une source lumineuse traverse ladite au moins une deuxième partie de la face visible ;
- ladite au moins une deuxième partie transparente ou translucide est configurée pour être traversée par une lumière notamment comprenant un rayonnement solaire susceptible d'être reçu par un module photovoltaïque de l'unité d'alimentation électrique autonome ;
- ladite au moins une source lumineuse est une source lumineuse configurée pour produire un éclairage continu ou quasi-continu sur ladite au moins une deuxième partie de la première couche ;
- l'assemblage comporte en plus de la première couche les couches successives suivantes :
   ▪ une deuxième couche comprenant un module photovoltaïque constituant l'unité d'alimentation électrique autonome ;
   ▪ une troisième couche comprenant un accumulateur d'énergie électrique constituant l'unité d'alimentation électrique autonome ;
   ▪ une quatrième couche formant une face cachée de l'élément d'habillage comprenant l'unité de contrôle ;
- l'assemblage comporte en plus de la première couche les couches successives suivantes :
   ▪ une deuxième couche comprenant un module photovoltaïque constituant l'unité d'alimentation électrique autonome, et
   ▪ une troisième couche comprenant une face cachée de l'élément d'habillage comportant l'unité de contrôle et un accumulateur d'énergie électrique constituant l'unité d'alimentation électrique autonome ;
- la première couche est rigide relativement aux autres couches comprises dans l'assemblage qui sont souples ;
- la pluralité de couches sont reliées entre elles par un élément de liaison de manière à unifier ces couches pour obtenir un assemblage formant un élément d'habillage monobloc ;
- ladite au moins une première partie opaque est une représentation graphique comprise sur et/ou dans un substrat participant à former la face visible ;
- les éléments fonctionnels sont imprimés sur des substrats constituants les couches de l'assemblage formant ledit au moins un élément d'habillage ;
- ledit au moins un éléments d'habillage comprend un fond, une carrure, un cadran, un brin de bracelet, une lunette, un réhaut, un bouton-poussoir, une couronne de remontoir et/ou une coiffe de couronne.

### Brève description des figures

Les buts, avantages et caractéristiques de la pièce d'horlogerie selon l'invention apparaîtront mieux dans la description suivante sur la base d'au moins une forme d'exécution non limitative illustrée par les dessins sur lesquels :
- la figure 1 est une vue en coupe d'une boîte de la pièce d'horlogerie équipée d'un élément d'habillage tel qu'un cadran pourvu d'un dispositif d'éclairage autonome selon des modes de réalisation de l'invention ;
- la figure 2 représente une vue de dessus d'une montre comprenant ce cadran, selon les modes de réalisation de l'invention ;
- la figure 3 représente une vue éclatée d'une première variante de l'assemblage de quatre couches superposées formant ledit cadran pourvu du dispositif d'éclairage autonome, lesdites couches comportant chacune un ou plusieurs éléments constitutifs du dispositif d'éclairage selon les modes de réalisation de l'invention ;
- la figure 4 représente une vue schématique de cette première variante de l'assemblage de couches formant le cadran pourvu du dispositif d'éclairage autonome selon les modes de réalisation de l'invention ;
- la figure 5 représente une vue éclatée d'une deuxième variante de l'assemblage comprenant trois couches superposées formant ledit cadran pourvu du dispositif d'éclairage autonome, lesdites couches comportant chacune un ou plusieurs éléments constitutifs du dispositif d'éclairage selon les modes de réalisation de l'invention, et
- la figure 6 représente une vue schématique de cette deuxième variante de cet assemblage de couches formant le cadran pourvu du dispositif d'éclairage autonome, selon les modes de réalisation de l'invention.

### Description détaillée de l'invention

La présente invention procède de l'idée générale inventive qui consiste à loger un dispositif d'éclairage autonome 3 dans un élément d'habillage 2a, 2b d'une pièce d'horlogerie 1, lequel élément d'habillage 2a, 2b étant pourvu d'une face visible 20a comprenant au moins une première partie opaque et au moins une deuxième partie transparente ou translucide.

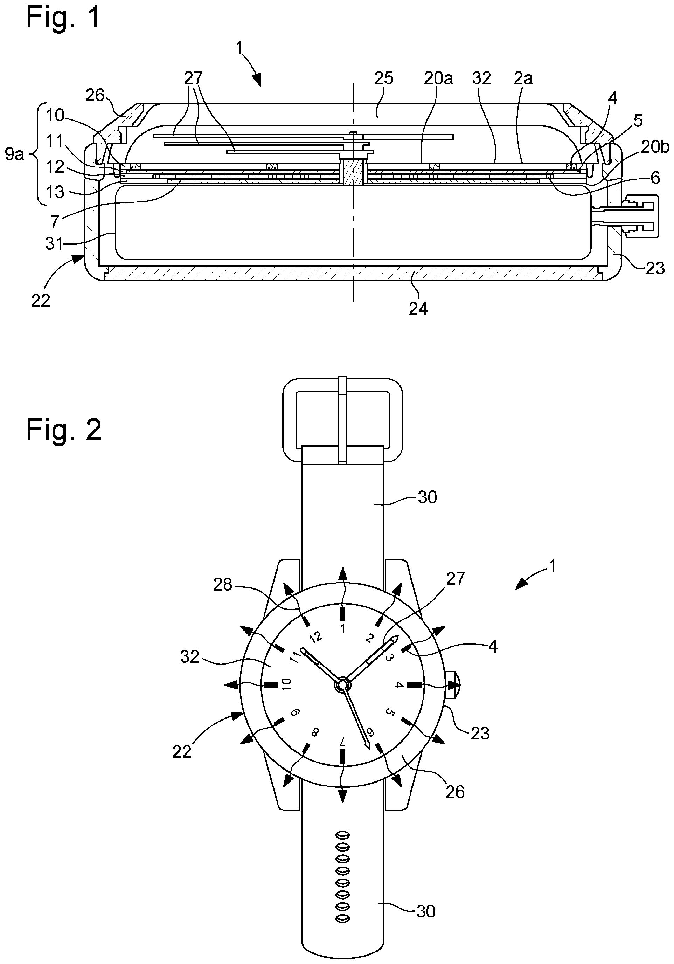

Dans cette pièce d'horlogerie 1, les éléments d'habillage 2a, 2b correspondent à l'ensemble des parties constitutives de la pièce d'horlogerie 1 entourant un mouvement 31, contribuant notamment à sa présentation extérieure, à sa protection, à sa fixation, à sa commande. Ces éléments d'habillage donne aussi à cette montre son esthétique et son style, et permettent également l'indication de toutes ses fonctions. Plus précisément et en référence aux figures 1 et 2, ces parties constitutives ici considérées comprennent de manière non exhaustive et non limitative : un fond 24, une carrure 23, un cadran 32, des brins de bracelet 30, une lunette 26, un réhaut, un bouton-poussoir, une aiguille, une couronne de remontoir et/ou une coiffe de couronne.

Sur ces figures 1 et 2, une telle pièce d'horlogerie 1 comprend un boitier 22 pourvu de la carrure 23 à laquelle sont fixés le fond 24 et une glace 25, d'un ensemble de composants formant le mouvement horloger 31, et le cadran 32 disposé entre le mouvement horloger 31 et la glace 25.

Dans cette configuration, le mouvement horloger 31 entraîne de façon connue de l'homme du métier des aiguilles 27 comprenant une aiguille des heures, une aiguille des minutes et éventuellement une aiguille des secondes. A cet effet, le cadran 32 comporte un trou traversant recevant l'axe des aiguilles.

Ainsi que nous l'avons précédemment évoqué, les éléments d'habillage 2a, 2b concernent tous les composants entourant le mouvement. Pour une meilleure compréhension, on ne considère que le cadran. On note qu'un tel élément d'habillage 2a, 2b comprend donc la face visible 20a qui est aussi appelée « partie visible » ou « partie supérieure visible », et comprend également une face cachée 20b autrement appelée « partie cachée » ou « partie inférieure cachée » de cet élément 2a, 2b.

Dans ce contexte, l'élément d'habillage 2a, 2b comprend deux faces 20a, 20b dont :
- la face dite visible 20a de l'extérieur de la pièce d'horlogerie 1 aussi appelée « *partie visible* » ou encore « *partie supérieure visible* », et
- la face dite cachée 20b agencée en regard du mouvement horloger 31 dans une enceinte du boitier 22 de la pièce d'horlogerie 1, cette face 20b étant autrement appelée « *partie cachée* » ou « *partie inférieure cachée* » de cet élément 2a, 2b.

Lorsque l'élément d'habillage 2a, 2b est un cadran 32, il comprend alors au moins une représentation graphique telle que :
- un élément de repère (ou d'affichage) comme par exemple un chiffre, un index, un trait ou encore un point contribuant à participer avec/sans les aiguilles à l'affichage d'une information/grandeur horlogère ou d'une information/grandeur physique mesurée par un capteur ou similaire compris dans le mouvement ;
- une inscription, un motif, un texte, un logo, etc.

Dans l'exemple de réalisation de l'invention décrit dans le présent texte, le mouvement horloger 31 est un mouvement mécanique. Dans une variante ce mouvement 31 peut être un mouvement électronique ou encore un mouvement électromécanique. On peut parler ici d'une pièce d'horlogerie 1 mécanique lorsque son mouvement est mécanique et de pièces d'horlogerie 1 électromécanique et électronique lorsqu'elles comportent respectivement des mouvements 31 électromécanique et électronique.

Dans cet élément d'habillage 2a, 2b, ce dispositif d'éclairage 3 comprend ses propres moyens d'alimentation électrique comme nous le verrons par la suite. Un tel dispositif d'éclairage 3 est dit autonome notamment par rapport au mouvement 31 de la pièce d'horlogerie 1 et en particulier de la source énergétique de ce mouvement 31, par exemple lorsque cette source est une alimentation électrique comme dans un mouvement électromécanique ou encore un mouvement électronique. Dans ces conditions, on comprend que l'énergie utilisée par ce dispositif d'éclairage 3 ne se fait pas au détriment de l'autonomie du mouvement 31.

Un tel dispositif d'éclairage 3 comporte les éléments fonctionnels suivants : au moins une source lumineuse 4 aussi appelée source de lumière, une unité d'alimentation électrique 21 et une unité de contrôle 7.

Dans ce contexte, la source lumineuse 4 est de préférence une source lumineuse étendue qui produit un éclairage continu ou quasi-continu sur la deuxième partie transparente ou translucide de l'élément d'habillage 2a, 2b considérée par laquelle de la lumière 28 va s'échapper. Une telle source lumineuse 4 peut correspondre à n'importe quel élément électroluminescent sélectionnée dans une liste comprenant de manière non exhaustive et non limitative :
- un condensateur électroluminescent plus connu sous l'acronyme LEC pour « Light-Emitting Capacitor » ;
- une diode électroluminescente de type LED (acronyme de « Light-Emitting Diode »), OLED (acronyme de « Organic Light-Emitting Diode »), AMOLED (acronyme de « Active-Matrix Organic Light-Emitting Diode ») ou encore QLED (acronyme de « Quantum Light-emitting diode » ;
- tout matériau électroluminescent activé par un champ électrique local ;
- tout matériau électroluminescent activé par un courant électrique ;
- toutes combinaisons de ces éléments électroluminescents.

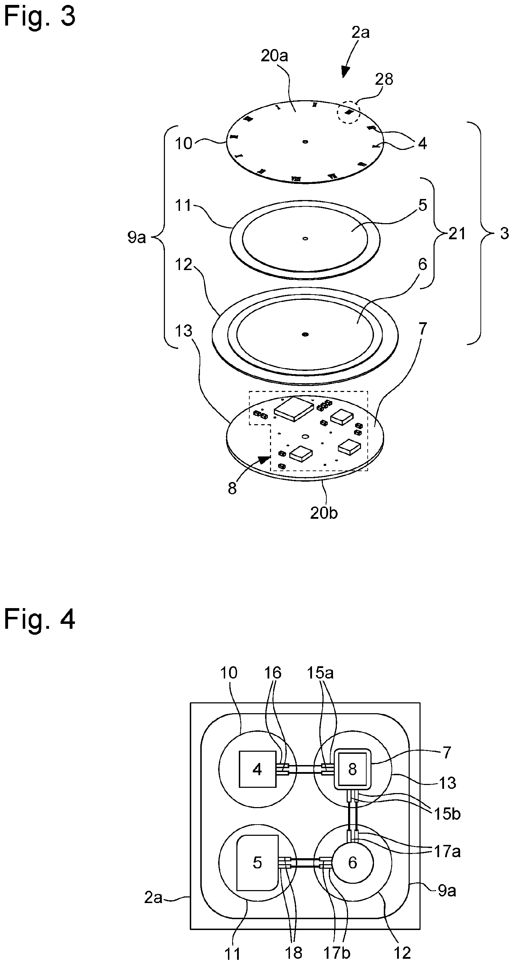

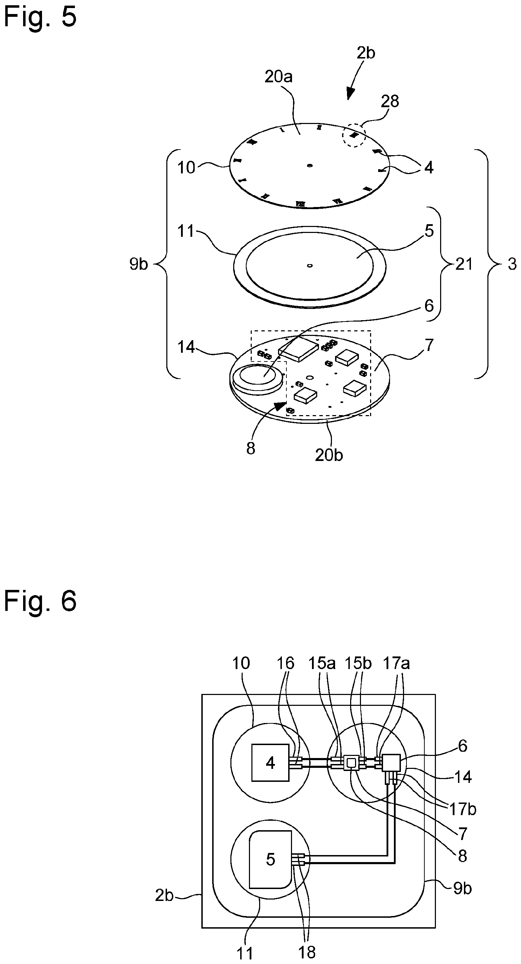

Dans ce dispositif d'éclairage 3, l'unité d'alimentation électrique 21 comprend un accumulateur d'énergie électrique 6 et un module photovoltaïque 5 aussi appelées cellules solaires. Ce module photovoltaïque 5 est relié à l'accumulateur d'énergie électrique 6 via des éléments de connexions référencés 17b et 18 sur les figures 4 et 6. Ce module photovoltaïque 5 peut comprendre une ou des cellules élémentaires du type à hétérojonction ou multijonction, connectées en parallèle ou en série. Les cellules photovoltaïques de ce module 5 peuvent être réalisées, de manière connue de l'homme du métier, à partir de matériaux semi-conducteur à base de cuivre, d'indium, de gallium et de sélénium, à base de tellurure de cadmium, à base d'arséniure de gallium monocristallin ou à base de silicium monocristallin ou polycristallin, ou à pérovskites. Il y a lieu de noter que ces exemples sont non limitatifs et que l'homme du métier saura trouver le type de cellules photovoltaïques adapté à l'invention.

On notera que lesdites au moins une première partie opaque et au moins une deuxième partie transparente ou translucide de la face visible de l'élément d'habillage 2a, 2b sont de préférence configurées pour être traversé par un rayonnement lumineux ou solaire, susceptible d'alimenter le module photovoltaïque 5 afin que ce dernier puisse convertir l'énergie solaire provenant de ce rayonnement en énergie électrique. En particulier, la première partie peut être configurée pour apparaitre visuellement opaque, en particulier pour l'oeil humain, tout en pouvant être traversé par un tel rayonnement solaire.

Dans ce dispositif d'éclairage 3, l'unité de contrôle 7 aussi appelée microcontrôleur, comporte un circuit électronique 8 comprenant des ressources matérielles en particulier au moins un processeur coopérant avec des éléments de mémoire ainsi que des bus d'adresses, de données et de contrôle. Cette unité de contrôle 7 comprend dans ses éléments de mémoire un algorithme de gestion de l'illumination de ladite au moins une source lumineuse 4. Un tel algorithme est exécuté par le processeur de cette unité de contrôle 7 en tenant compte notamment de données provenant de capteurs d'évènement compris dans le dispositif d'éclairage 3 afin d'assurer la gestion du fonctionnement de ladite au moins une source lumineuse 4.

On notera que de telles données peuvent par exemple apportées des informations relatives à des évènements détectés par ces capteurs, lesdits évènements étant susceptibles de contribuer au fonctionnement de ladite au moins une source lumineuse 4. Ces évènements peuvent comprendre de manière non limitative et non exhaustive : la détection d'un niveau de luminosité particulier dans l'environnement de la pièce d'horlogerie, la détection d'un élément sonore particulier ou d'un niveau sonore particulier, la détection d'un objet visuel particulier, la détection d'un mouvement effectué par une partie du corps de l'utilisateur sur laquelle est comprise cette pièce 1, etc.

Dans ce contexte, le capteur d'évènement de ce dispositif d'éclairage autonome 3, comprend en particulier et de manière non limitative et non exhaustive :
- un capteur de luminosité permettant de détecter le niveau de luminosité ambiante ;
- un capteur de mouvement tel qu'un capteur gyroscopique et/ou inertiel sous la forme d'un composant électronique de type circuit microsystèmes électromécaniques gyroscopique et/ou inertiel ;
- un capteur sonore de type microphone, et/ou
- un capteur optique de type capteur photographique.

Par ailleurs, on notera que cette unité de contrôle 7 est apte à gérer/contrôler le fonctionnement des sources lumineuses 4 de manière simultanée et/ou en séquence. De plus chaque source lumineuse 4 est gérée/contrôlée par cette unité de contrôle de manière distincte. Dans ce contexte, la gestion du fonctionnement de chaque source lumineuse 4 peut consister de manière non limitative et non exhaustive en la réalisation des opérations suivantes : un allumage ou une extinction séquentiel (le), un allumage ou une extinction simultané (e) de deux ou plusieurs sources lumineuses 4, un clignotement d'une ou de plusieurs sources lumineuses 4, une définition d'une fréquence de clignotement pour chaque source lumineuse 4, une durée de clignotement pour chaque source lumineuse 4, une durée d'allumage ou d'extinction pour chaque source lumineuse 4, etc.

Une telle unité de contrôle 7 peut aussi comprendre dans ses éléments de mémoire un algorithme de gestion de l'accumulateur d'énergie électrique 6 en particulier la gestion de son rechargement par le module photovoltaïque 5 et la gestion de la consommation électrique par ladite source lumineuse 4.

En référence aux figures 1, 3 et 5 et ainsi que nous l'avons évoqué précédemment, le dispositif d'éclairage autonome 3 est donc compris dans l'élément d'habillage 2a, 2b. Dans cette configuration, les éléments fonctionnels de ce dispositif d'éclairage 3 à savoir la source lumineuse 4, l'accumulateur d'énergie électrique 6, le module photovoltaïque 5 et l'unité de contrôle 7, sont inclus dans une ou plusieurs couches 10, 11, 12, 13, 14 formant l'élément d'habillage 2a, 2b.

Autrement dit, le corps de cet élément d'habillage 2a, 2b est formé par l'assemblage 9a, 9b d'une pluralité de couches superposées 10, 11, 12, 13, 14 reliées entre elles et comportant chacune un ou plusieurs éléments fonctionnels du dispositif d'éclairage 3.

Dans cet assemblage 9a, 9b, les couches 10, 11, 12, 13, 14 sont reliées entre elles par un élément de liaison tel qu'une substance adhésive de manière à les unifier afin obtenir un assemblage 9a, 9b monolithique formant ainsi un élément d'habillage monobloc 2a, 2b. De telles couches 10, 11, 12, 13, 14 sont superposées dans l'assemblage 9a, 9b, en étant agencées les unes au-dessus des autres selon un ordre défini.

Ainsi un tel élément d'habillage monobloc 2a, 2b (p. ex. : cadran), présente en outre l'avantage de pouvoir être monté de manière amovible dans une boite de pièce d'horlogerie 1 en plus de faciliter son intégration dans ou sur une telle boite.

Plus précisément, dans des première et deuxième variantes, cet assemblage 9a, 9b comprend une première couche 10 formant/constituant une face visible 20a de l'élément d'habillage 2a, 2b. Une telle première couche 10 comporte au moins une source lumineuse 4 du dispositif d'éclairage 3 de l'élément d'habillage 2a, 2b.

Cette première couche 10 est formé d'un substrat qui comprend au moins une première partie non transparente ou non translucide ou opaque ou sensiblement opaque, et au moins une deuxième partie transparente ou translucide ou au moins partiellement transparente ou au moins partiellement translucide. On comprend que la deuxième partie transparente ou translucide constitue une portion de l'élément d'habillage 2a, 2b au travers de laquelle :
- la lumière 28 produite par ladite au moins une source lumineuse 4 peut s'échapper vers l'extérieur de l'élément d'habillage 2a, 2b, et donc de la pièce d'horlogerie 1, et
- la lumière provenant de l'environnement de la pièce d'horlogerie 1 peut pénétrer dans l'élément habillage 2a, 2b en direction du module photovoltaïque 5 du dispositif d'éclairage 3, cette lumière comprenant des rayonnements solaires lorsqu'elle est d'origine naturelle.

Cette première couche 10 est de préférence rigides ou semi-rigides en comparaison avec les autres couches 11, 12, 13, 14 de l'assemblage 9a, 9b, qui sont de préférences souples ou flexibles. On comprend ici qu'une telle première couche 10 participe à rigidifier de manière structurelle l'assemblage 9a, 9b de l'élément d'habillage 2a, 2b.

Cette première couche 10 est formée par un substrat transparent ou translucide ou au moins partiellement transparent ou au moins partiellement translucide qui est rigide ou semi-rigide. Un tel substrat est réalisé en une matière présentant une transmittance aux rayonnements solaires en particulier aux rayonnements ultraviolets aussi appelée UVT (acronyme de « Ultra-Violet Transmission ») qui est comprise entre 65 et 95 pourcent. Cette transmittance est de préférence de 85 pourcent. Un telle matière peut être transparent ou translucide. Cette matière peut être de manière non limitative et non exhaustive un polymère, du verre ou encore de la céramique.

On notera que la céramique peut être ici de de la zircone qui est un matériau transparent ou translucide ou au moins partiellement transparent ou au moins partiellement translucide. Cette zircone permet de procurer une illumination surprenante pour la pièce d'horlogerie 1, lui conférant à la pièce un aspect précieux et une illumination plus ou moins diffuse, discret, doux et agréable, ces caractéristiques pouvant être variées pratiquement à l'infini selon le rendu esthétique désiré, ce qui augmente la qualité esthétique finale de la pièce d'horlogerie 1. En outre, la zircone stabilisée en phase tétragonale par adjonction d'yttria (Y-TZP acronyme de « yttria-stabilized tetragonal zirconia polycristals ») est la céramique technique qui offre à la fois la meilleure ténacité mécanique et un des meilleurs coefficients de transmission lumineuse. Son utilisation dans une pièce d'horlogerie 1 pour laisser s'échapper de la lumière 28 depuis l'intérieur d'un élément d'habillage 2a, 2b de la pièce 1 permet donc de conférer à cette dernière une très bonne transmission lumineuse, tout en permettant des jeux de lumière originaux, dans un but fonctionnel, esthétique et/ou ludique.

Dans cette configuration, une telle matière peut subir un traitement visant à créer ladite au moins une première partie opaque dans et/ou sur le substrat. Ce traitement consiste par exemple à réaliser dans le substrat et/ou sur une surface supérieure de ce substrat ladite au moins une première partie non transparente ou non translucide ou opaque ou sensiblement opaque, destinée à être éclairer par la lumière 28 produite par ladite au moins une source lumineuse 4.

Lorsque ce substrat est réalisé en une matière comme la céramique telle que le zircone, la première partie opaque peut par exemple être effectuée sur ce substrat, de manière non limitative et non exhaustive, par :
- une méthode de carburation et/ou nitruration sélective de cette surface ;
- une méthode de variation d'épaisseur du substrat par gravure mécanique ou laser (p. ex. : un retrait de quelques 10^{ième} ou 100^{ième} de millimètres dans la céramique) ;
- une méthode de gravure interne dans le substrat notamment par un procédé de gravure laser ;
- par variation de densité de ce substrat ;
- une méthode d'impression opaque ou semi-transparente à l'intérieur ou sur la surface inférieure du substrat (p. ex. : dans la ou des cavités formées dans cette surface inférieure) ;
- une méthode de collage d'un revêtement opaque ou semi-transparente ;
- une méthode de dépôt physique en phase vapeur PVD (acronyme de « Physical Vapor Déposition ») ou autre, structuré à l'intérieur ou à la surface du substrat ;
- une combinaison de ces méthodes.

Ainsi, lorsque la lumière 28 est émise par la source lumineuse, la représentation graphique apparaît par rétroéclairage sur la face visible 20a de l'élément d'habillage 2a, 2b.

Dans une version, le substrat rigide ou semi-rigide peut être réalisé en une première matière constituant ladite au moins une première partie et en une deuxième matière constituant ladite au moins une deuxième partie. Dans ce contexte, la première matière peut être venue de matière avec la deuxième matière faisant ainsi de cette première couche 10 une pièce monobloc. On comprendra que cette première couche 10 est alors constituée uniquement de cette dite au moins une première partie et de cette dite au moins une deuxième partie. Lesdites au moins une première et une deuxième parties s'étendent de préférence dans l'épaisseur de ce substrat, laquelle épaisseur étant définie entre des surfaces supérieure et inférieure de ce substrat. En s'étendant ainsi dans cette épaisseur, ladite au moins une première partie et ladite au moins une deuxième partie relient ces surfaces supérieure et inférieure du substrat entre elles.

Dans cette version, la première matière peut être présente dans le substrat dans une proportion plus importante que la deuxième matière. On rappelle que cette deuxième matière est visuellement identifiable dans le substrat constituant cette première couche 10 car elle correspond à ladite au moins une deuxième partie ou zone transparente ou translucide de cette première couche 10. On comprend que dans ce contexte la surface totale occupée sur la face visible 20a de l'élément d'habillage 2a, 2b par la ou les premières parties, est supérieure à la surface totale occupée, sur cette même face 20a, par la ou les deuxièmes parties. Dans cet exemple, une partie des deuxièmes parties peuvent autoriser le passage de la lumière 28 produite par ladite au moins une source lumineuse, par exemple en formant des éléments de repère tels que des index lorsque cet élément d'habillage 2a, 2b est un cadran 32, et une autre partie peut autoriser le passage de la lumière provenant de l'environnement de la pièce d'horlogerie 1 pouvant comprendre les rayonnements solaires. Dans cette version, la première matière peut constituer entre 55 et 75% du corps de l'élément d'habillage 2a, 2b de préférence 65%.

Dans un autre exemple de cette version, cette première matière peut être en proportion moins importante que la deuxième matière dans le substrat de cette première couche 10. On comprend que dans ce contexte, la surface totale occupée sur la face visible 20a de l'élément d'habillage 2a, 2b, par la ou les premières parties, est inférieure à la surface totale occupée sur cette même face par la ou les deuxièmes parties. Dans cet exemple, la ou les premières parties opaques peuvent avoir la forme d'une ou des représentations graphiques évoquées précédemment, chaque représentation graphique pouvant apparaitre par rétroéclairage sur la face visible 20a de l'élément d'habillage 2a, 2b lorsque ces premières parties sont éclairées. On notera que dans cette configuration, la première matière peut alors constituer entre 20 et 30% du corps de l'élément d'habillage 2a, 2b de préférence 25%.

Dans cette première couche 10, au moins une source lumineuse 4 est agencée dans ou sur une surface inférieure du substrat. Un tel agencement de la source lumineuse 4 dans ou sur cette surface inférieure, est configuré pour assurer un éclairage de tout ou partie de la face visible 20a de l'élément d'habillage 2a, 2b. Par exemple, lorsque cet élément d'habillage 2a, 2b est un cadran 32, il peut s'agir d'un éclairage d'un élément de repère (ou affichage) tel qu'un chiffre, un index, un trait, un point ou un éclairage d'une ou de plusieurs aiguilles, ou encore d'un éclairage de tout ou partie de la surface de la face visible 20a de ce cadran 2a, 2b.

Cet éclairage peut être un éclairage de type rétroéclairage ou semi-direct lorsque la source lumineuse 4 est agencée dans une cavité définie dans le substrat. Une telle cavité peut être une ouverture borgne réalisée dans la surface inférieure de ce substrat. Plus précisément, cette ouverture borgne est réalisée dans :
- la première partie opaque afin de participer à l'éclairage de la représentation graphique formée par cette première partie, et/ou;
- la deuxième partie transparente ou translucide pour un éclairage de la première partie correspondant à la représentation graphique comprise dans le substrat et/ou sur la surface supérieure et/ou sur la surface inférieure (p. ex. : le fond de la cavité) de ce substrat.

Cet éclairage peut être un éclairage direct lorsque la source lumineuse 4 est agencée dans la cavité définie dans le substrat. Une telle cavité peut être une ouverture borgne réalisée dans la surface inférieure de ce substrat. Plus précisément, cette ouverture borgne est réalisée dans la deuxième partie transparente ou translucide pour un éclairage de cette deuxième partie formant une représentation graphique de petite taille telle qu'un élément de repère comme un index lorsque l'élément d'habillage 2a, 2b est un cadran 32. C'est par exemple le cas quand la surface totale occupée sur la face visible 20a de l'élément d'habillage 2a, 2b par la ou les premières parties est supérieure à la surface totale occupée sur cette même face par la ou les deuxièmes parties.

Dans cette configuration, le rayonnement lumineux 28, ou la lumière 28, produit par cette source lumineuse 4 peut s'échapper vers l'extérieur de l'élément d'habillage 2a, 2b via ladite la face visible 20a de cet élément 2a, 2b, autorisant ainsi la visualisation d'au moins une représentation graphique tel qu'un élément de repère dans le noir ou l'obscurité.

Cet éclairage peut aussi être un éclairage direct lorsque la source lumineuse 4 est agencée dans une ouverture traversante réalisée dans la dite au moins une première partie et/ou la dite au moins une deuxième partie. Une telle ouverture s'étend dans l'épaisseur du substrat de la première couche 10, en débouchant en ses deux extrémités respectivement dans les surfaces supérieure et inférieure de ce substrat. Dans cette configuration, tout ou partie de la source lumineuse 4 peut faire saillie de la surface supérieure de ce substrat et donc de la face visible 20a de cet élément d'habillage 2a, 2b. A titre d'exemple dans une telle configuration lorsque l'élément d'habillage 2a, 2b est un cadran 32, ladite au moins une source lumineuse 4 faisant saillie peut alors former un élément de repère tel qu'un index, un chiffre, un point, un trait, etc...

Un tel éclairage peut également être un éclairage indirect lorsque ladite au moins une source lumineuse 4 est couplée à au moins un guide d'ondes. Ce guide d'onde encore appelé guide de lumière, permet d'amener la lumière 28 depuis le point où elle injectée dans le guide jusque dans le substrat ou jusqu'à une zone du substrat (p.ex. : cavité, ouverture traversante) proche de la surface supérieure de ce substrat. Un tel guide de lumière peut être une fibre optique qui permet de contourner les éventuels obstacles qui peuvent se dresser dans le substrat par exemple entre l'élément électroluminescent et la zone du substrat proche de la surface supérieure de ce substrat, par laquelle la lumière 28 va s'échapper. Dans cette variante de réalisation, c'est donc la lumière 28 qui est amenée, via le guide d'onde, depuis l'élément électroluminescent jusqu'à cette zone du substrat à éclairer.

Dans une telle configuration, une première extrémité du guide d'ondes est couplée avec la source lumineuse 4 et une deuxième extrémité de ce guide peut être agencée dans :
- une cavité pouvant être une ouverture borgne réalisée dans ladite première et/ou ladite deuxième partie (s) du substrat et ce, dans la surface inférieure de ce substrat de la première couche 10, ou
- une ouverture traversante s'étendant dans ladite première et/ou ladite deuxième partie (s) comprise (s) dans l'épaisseur du substrat de la première couche 10, ladite ouverture débouchant en ses deux extrémités respectivement dans les surfaces supérieure et inférieure de ce substrat et donc de la première couche 10. Ainsi cette deuxième extrémité peut faire saillie de la surface supérieure du substrat et donc de la face visible 20a de l'élément d'habillage 2a, 2b. A titre d'exemple dans une telle configuration lorsque l'élément d'habillage 2a, 2b est un cadran 32, ladite au moins une source lumineuse 4 faisant saillie peut alors former un élément de repère tel qu'un index, un chiffre, un point, un trait, etc.

Dans ce contexte, l'éclairage indirect peut être réalisé par une seule source lumineuse 4 comprise sur la surface inférieure du substrat de cette première couche 10 en étant couplée à plusieurs guides d'ondes dont les deuxièmes extrémités lorsqu'elles sont agencées dans :
- des cavités émettant chacune un rayonnement lumineux, provenant de cette source lumineuse 4, ce rayonnement s'échappant vers l'extérieur de l'élément d'habillage 2a, 2b via sa face visible 20a en autorisant ainsi la visualisation d'au moins une représentation graphique en particulier dans l'obscurité, et/ou
- des ouvertures traversantes en faisant saillie ou pas de la surface supérieure de cette première couche 10 afin de former des représentations graphiques tels que des éléments de repères, et émettant chacune un rayonnement lumineux, provenant de cette source lumineuse 4.

Dans cette première couche 10, la source lumineuse 4 est appliquée/fixée sur la surface inférieure du substrat de cette première couche 10, dans une cavité ou sur une paroi interne d'une ouverture traversante évoquée précédemment et ce, par impression ou évaporation.

En outre, on notera que la surface inférieure de cette première couche 10 peut être autocollante afin de participer à son assemblage avec la deuxième couche 11.

Dans l'assemblage 9a, 9b formant l'élément d'habillage 2a, 2b, la deuxième couche 11 comprend un substrat comportant le module photovoltaïque 5. Ce substrat est de préférence flexible ou souple. Un tel substrat peut être un film sur lequel est disposé ce module photovoltaïque 5. A titre d'exemple ce substrat peut être réalisé en un matériau appartenant à la famille des polymères. Un tel module photovoltaïque 5 s'étend préférentiellement sur l'ensemble d'une zone dite active d'une surface supérieure de ce substrat de la deuxième couche 11. Cette zone active est une portion de cette surface supérieure du substrat qui est apte à recevoir la lumière provenant de la surface inférieure de la première couche 10 de l'élément d'habillage 2a, 2b. Cette lumière qui a traversé tout ou partie de la première couche 10, provient de l'environnement extérieur de l'élément d'habillage 2a, 2b, et donc de la pièce d'horlogerie 1, ici principalement du rayonnement solaire lorsqu'elle est d'origine naturelle.

On notera que le module photovoltaïque 5 est appliqué sur la surface supérieure de ce substrat à partir de procédés d'impression par jet d'encre ou encore par sérigraphie ou à partir de procédé d'impression par évaporation thermique. On parlera d'ailleurs ici d'une deuxième couche 11 comprenant un module photovoltaïque 5 imprimé. En particulier, d'un module photovoltaïque 5 imprimé sur le substrat de la deuxième couche 11.

Par ailleurs, on remarquera qu'une fois que le module photovoltaïque 5 a été appliqué sur le substrat, une couche d'une substance autocollante ou adhésive peut être déposée sur tout ou partie de la surface supérieure et/ou de la surface inférieure de ce substrat. Dans ces conditions, la deuxième couche 11 peut être une couche autocollante qui participe à faciliter son assemblage/montage/collage avec les autres couches en particulier avec la première couche 10 et/ou une troisième couche 12 de cet assemblage 9a, 9b.

Dans cette première variante, l'assemblage 9a comprend cette troisième couche 12 comportant également un substrat de préférence flexible ou souple, comportant l'accumulateur d'énergie électrique 6 du dispositif d'éclairage autonome 3. Ce substrat peut être un film sur lequel est compris l'accumulateur 6. Un tel substrat peut être réalisé en un matériau appartenant à la famille des polymères.

Cet accumulateur 6 peut être une batterie au lithium ou encore une batterie à semi-conducteurs. Un tel accumulateur 6 est appliqué sur une surface supérieure de ce substrat à partir de procédés connus de l'état de la technique tels que :
- des procédés d'impression sur substrat polymère souple lorsqu'il s'agit par exemple d'une batterie au lithium, ou
- des procédés d'impression tridimensionnelle lorsqu'il s'agit par exemple d'une batterie à semi-conducteurs telle qu'une batterie lithium-métal à semi-conducteurs.

On parlera d'ailleurs ici d'une troisième couche 12 comprenant un accumulateur d'énergie électrique 6 imprimé. En particulier, d'un accumulateur d'énergie électrique 6 imprimé sur le substrat de la troisième couche 12.

Ainsi, de tels procédés permettent d'obtenir une troisième couche 12 comprenant cet accumulateur 6 qui est souple et ultrafine.

En outre, on remarquera qu'une fois l'accumulateur 5 appliqué sur le substrat, une couche d'une substance autocollante ou adhésive peut être déposée sur tout ou partie de la surface supérieure et/ou de la surface inférieure de ce substrat. Dans ces conditions, la troisième couche 12 peut être une couche autocollante qui participe à faciliter son assemblage/montage/collage avec les autres couches en particulier avec la deuxième couche 11 et/ou une quatrième couche 13 de cet assemblage 9a.

On notera que cet accumulateur 6 sert à stocker l'énergie électrique produite par le module photovoltaïque 5 et à la restituer sur demande pour alimenter ladite au moins une source lumineuse 4.

Dans la première variante illustrée sur les figures3 et 4, cet assemblage 9a comprend cette quatrième couche 13 formant la face cachée de l'élément d'habillage 2a. Cette quatrième couche 13 est formée par un substrat de préférence flexible ou souple, comportant l'unité de contrôle 7. Un tel substrat peut être par exemple un PCB flexible sur lequel est agencée cette unité de contrôle 7 en particulier sur la surface supérieure de ce PCB et donc du substrat. Dans ce contexte, l'édification de l'unité de contrôle 7 sur cette surface supérieure du substrat peut être réalisée à partir de procédés d'impression tridimensionnelle ou encore des procédés d'impression sur polymère.

Dans la deuxième variante, l'assemblage 9b formant l'élément d'habillage 2b, comprend trois couches 10, 11, 14, reliées entre elles. On remarquera que cette deuxième variante se différencie de la première variante en ce qu'elle comprend donc trois couches 10, 11, 14 au lieu de quatre couches 10, 11, 12, 13, comme dans la première variante. Dans cette deuxième variante, l'accumulateur d'énergie électrique 6 du dispositif d'éclairage autonome 3 est maintenant compris dans la troisième et dernière couche 14 de cet assemblage 9b avec l'unité de contrôle 7.

Une telle troisième couche 14 formant la face cachée de l'élément d'habillage 2b, est constituée d'un substrat de préférence flexible ou souple, sur lequel sont édifiés, de préférence sur la surface supérieure de ce substrat, l'accumulateur 6 et le circuit électronique 8 constituant l'unité de contrôle 7. Une telle édification de l'accumulateur 6 et de l'unité de contrôle 7 sur cette surface supérieure du substrat, peut être réalisée à partir de procédés d'impression tridimensionnelle ou encore des procédés d'impression sur polymère. On notera qu'un tel substrat peut être par exemple un PCB flexible.

En résumé dans cette deuxième variante, l'assemblage 9b comprend alors :
- une première couche 10 formant la face visible 20a de l'élément d'habillage 2b incluant ladite au moins une source lumineuse 4 du dispositif d'éclairage 3 ;
- une deuxième couche 11 incluant le module photovoltaïque 5, et
- la troisième couche 14 formant la face cachée 20b de l'élément d'habillage 2b incluant l'accumulateur 6 et l'unité de contrôle 7.

On notera que dans cette deuxième variante, les première et deuxième couches 10, 11 sont similaires à celles de la première variante de l'assemblage 9a.

Par ailleurs, en référence aux figures 4 et 6, le circuit électronique 8 de l'unité de contrôle 7 comprend des premiers éléments de connexion 15a qui sont reliés à des éléments de connexion 16 de ladite au moins une source lumineuse 4 pour la gestion du fonctionnement de cette source lumineuse 4. Ce circuit électronique 8 comprend aussi des deuxièmes éléments de connexion 15b reliés à des premiers éléments de connexion 17a de l'accumulateur 6. Cet accumulateur 6 comporte également des deuxièmes éléments de connexion 17b reliés à des éléments de connexion 18 du module photovoltaïque 5.

En outre, on notera que les capteurs d'évènements du dispositif d'éclairage 3, évoqués précédemment sont de préférence agencés dans la première couche 10 et/ou la dernière couche 13, 14 de l'assemblage 9a, 9b en étant reliés à l'unité de contrôle 7 de ce dispositif 3.

Dans une troisième variante non représentée, l'assemblage formant l'élément d'habillage comprend deux couches reliées entre elles. On remarquera que cette troisième variante se différencie de la deuxième variante en ce qu'elle comprend donc deux couches au lieu de trois couches 10, 11, 14, comme dans cette deuxième variante. Dans cette troisième variante, le module photovoltaïque 5 du dispositif d'éclairage autonome 3 est maintenant compris dans la première couche et en particulier sur la surface inférieure du substrat formant cette première couche. Ce module photovoltaïque 5 peut être appliqué sur cette surface inférieure du substrat de cette première couche à partir de procédés d'impression par jet d'encre ou encore par sérigraphie ou à partir de procédés d'impression par évaporation thermique. On notera donc que cette première couche est alors similaire aux premières couches 11 des première et deuxième variantes, à l'exception du fait que dans cette troisième variante, la première couche comprend en plus le module photovoltaïque.

Par ailleurs dans la troisième variante, et de manière similaire à la deuxième variante, l'accumulateur d'énergie électrique 6 du dispositif d'éclairage autonome 3 est compris dans la deuxième et dernière couche de cet assemblage avec l'unité de contrôle 7. Une telle deuxième couche formant la face cachée de l'élément d'habillage, est constituée d'un substrat de préférence flexible ou souple, sur lequel sont édifiés, de préférence sur la surface supérieure de ce substrat, l'accumulateur 6 et le circuit électronique 8 constituant l'unité de contrôle 7. Cette édification de l'accumulateur 6 et de l'unité de contrôle 7 sur la surface supérieure du substrat, peut être réalisée à partir de procédés d'impression tridimensionnelle ou encore des procédés d'impression sur polymère. On notera qu'un tel substrat peut être par exemple un PCB flexible.

En résumé dans cette troisième variante, l'assemblage comprend alors :
- une première couche formant la face visible 20a de l'élément d'habillage incluant ladite au moins une source lumineuse 4 et le module photovoltaïque 5 du dispositif d'éclairage 3, et
- une deuxième couche formant la face cachée 20b de l'élément d'habillage incluant l'accumulateur 6 et l'unité de contrôle 7.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées.

## Revendications

1. Pièce d'horlogerie (1) comportant au moins un élément d'habillage (2a, 2b) comprenant une face visible (20a) formée d'au moins une première partie opaque et d'au moins une deuxième partie transparente ou translucide, ledit au moins un élément d'habillage (2a, 2b) comportant un dispositif d'éclairage autonome (3) comportant les éléments fonctionnels suivants :
- au moins une source lumineuse (4) susceptible de générer une lumière (28) dans la face visible (20a) de l'élément d'habillage (2a, 2b) ;
- une unité d'alimentation électrique autonome (21), et
- une unité de contrôle (7) configurée pour gérer le fonctionnement de la source lumineuse (4) ;
ledit au moins un élément d'habillage (2a, 2b) étant formé par un assemblage (9a, 9b) d'une pluralité de couches superposées (10, 11, 12, 13, 14) reliées entre elles et comportant chacune un ou plusieurs éléments fonctionnels du dispositif d'éclairage autonome (3).

2. Pièce d'horlogerie (1) selon la revendication précédente, **caractérisée en ce que** l'assemblage (9a, 9b) est constitué d'une première couche (10) formant ladite face visible (20a) comprenant ladite au moins une source lumineuse (4).

3. Pièce d'horlogerie (1) selon la revendication 1, **caractérisée en ce que** ladite au moins une source lumineuse (4) est agencée dans la première couche (10), ledit agencement étant configuré pour que l'essentiel ou la totalité de la lumière (28) produite par ladite au moins une source lumineuse (4) traverse ladite au moins une deuxième partie de la face visible (20a).

4. Pièce d'horlogerie (1) selon l'une quelconque des revendications précédentes, **caractérisée en ce que** ladite au moins une deuxième partie transparente ou translucide est configurée pour être traversée par une lumière notamment comprenant un rayonnement solaire susceptible d'être reçu par un module photovoltaïque (5) de l'unité d'alimentation électrique autonome (21).

5. Pièce d'horlogerie (1) selon l'une quelconque des revendications précédentes, **caractérisée en ce que** ladite au moins une source lumineuse (4) est une source lumineuse configurée pour produire un éclairage continu ou quasi-continu sur ladite au moins une deuxième partie de la première couche (10).

6. Pièce d'horlogerie (1) selon l'une quelconque des revendications précédentes, **caractérisée en ce que** l'assemblage (9a) comporte en plus de la première couche (10) les couches successives suivantes :
- une deuxième couche (11) comprenant un module photovoltaïque (5) constituant l'unité d'alimentation électrique autonome (21) ;
- une troisième couche (12) comprenant un accumulateur d'énergie électrique (6) constituant l'unité d'alimentation électrique autonome (21) ;
- une quatrième couche (13) formant une face cachée (20b) de l'élément d'habillage (2a) comprenant l'unité de contrôle (7).

7. Pièce d'horlogerie (1) selon l'une quelconque des revendications 1 à 5 précédentes, **caractérisée en ce que** l'assemblage (9b) comporte en plus de la première couche (10) les couches successives suivantes :
- une deuxième couche (11) comprenant un module photovoltaïque (5) constituant l'unité d'alimentation électrique autonome (21), et
- une troisième couche (14) comprenant une face cachée (20b) de l'élément d'habillage (2a) comportant l'unité de contrôle (7) et un accumulateur d'énergie électrique (6) constituant l'unité d'alimentation électrique autonome (21).

8. Pièce d'horlogerie (1) selon l'une quelconque des revendications précédentes, **caractérisée en ce que** la première couche (10) est rigide relativement aux autres couches (11, 12, 13, 14) comprises dans l'assemblage (9a, 9b) qui sont souples.

9. Pièce d'horlogerie (1) selon l'une quelconque des revendications précédentes, **caractérisée en ce que** la pluralité de couches sont reliées entre elles par un élément de liaison de manière à unifier ces couches (10, 11, 12, 13, 14) pour obtenir un assemblage (9a, 9b) formant un élément d'habillage monobloc (2a, 2b).

10. Pièce d'horlogerie (1) selon l'une quelconque des revendications précédentes, **caractérisée en ce que** ladite au moins une première partie opaque est une représentation graphique comprise sur et/ou dans un substrat participant à former la face visible (20a).

11. Pièce d'horlogerie (1) selon l'une quelconque des revendications précédentes, **caractérisée en ce que** les éléments fonctionnels sont imprimés sur des substrats constituants les couches (10, 11, 12, 13,14) de l'assemblage (9a, 9b) formant ledit au moins un élément d'habillage (2a, 2b).

12. Pièce d'horlogerie (1) selon l'une quelconque des revendications précédentes, **caractérisée en ce que** ledit au moins un éléments d'habillage (2a, 2b) comprend un fond (24), une carrure (23), un cadran (32), un brin de bracelet (30), une lunette (26), un réhaut, un bouton-poussoir, une couronne de remontoir et/ou une coiffe de couronne.
